# EUROPEAN PATENT SPECIFICATION

(11) **EP 2 489 556 B1**
(45) Date of publication and mention of the grant of the patent: **29.01.2014**
(21) Application number: 12166793.5
(22) Date of filing: 25.06.2007
(51) Int. Cl.: B60R 19/54, F41H 11/11

(54) **Improved wire cutting device**
Verbesserte Drahtschneidevorrichtung
Dispositif de coupe de fils amélioré

(43) Date of publication of application: 22.08.2012
(62) Divisional of application: 07789441.8
(73) Proprietor: Carosi, Ariela, 10090 Rosta (IT); Pennisi, Vittorio, 90143 Palermo (PA) (IT)
(72) Inventor: Pennisi, Carlo Paolo, I-10090 Rosta (TO) (IT)
(74) Representative: Turini, Laura

(56) References cited:
- GB-A- 118 449
- US-A- 5 308 114
- US-A- 5 586 785

## Description

### Field of the invention

The present invention relates to a safety device, to be mounted on a vehicle, capable of cutting a cable or a stretched wire that can met during the run and arranged at a height suitable to block its transit.

### Description of the technical problem

Often, rescue vehicles on wheels or tracks must travel through devastated urbanized zones, where fallen cables or stretched wires can be met, arranged transversally with respect to the vehicle path blocking the way.

The problem is amplified if civilian or military vehicles are called for international pacification tasks and have to move in mainly urbanized areas, during war. In this case, the cables can be stretched accidentally, for example collapsed electric lines, or intentionally, for example in strategic points for deviating or blocking the way, or for prearranging an ambush.

In this context, in addition to steel cables and barbed wire, the vehicles can also run up against cables under electric voltage, arranged on the roads accidentally or intentionally.

In order to shield these vehicles protection devices exist, so-called "wire cutters", mounted on the front part of the vehicles and formed substantially by a rod connected frontally having a free upper end with a hooked blade.

The rod, generally, is arranged according to the median longitudinal plane of the vehicle inclined at an angle towards the back of the vehicle. Furthermore, the rod is distanced from the vehicle. This way, a stretched wire along the path of a running vehicle meets the inclined rod before touching the vehicle. Then, the stretched wire forms two chords, at the two sides of the rod and, always without touching the vehicle starts to slide towards the above following the inclination of the rod, up to reaching the hooked blade, where it is cut. A high kinetic energy of the vehicle assists this step, owing to the strong resistance that the cable offers against lifting with respect to the original line where it was stretched.

A main drawback of the existing wire cutters is that when the cable has high diameter or resistance over a certain limit, the hooked blade is not capable to cut it, thus the cable does not break. In certain cases the deformation of the blade and/or of the cable, which may be also under high voltage, traps the vehicle which cannot free the vehicle from the cable, which remains dangerously hooked without possibility of continue the way. This can cause serious risks serious for safety of the passengers that would become easy target of assaults especially during peace operations in places affected by war.

Another problem of particular gravity is that the vehicles often carry people in a position partially external to the vehicle, such as protruding drivers or other operators transported out of the vehicle body profile. In this case, these people are exposed to cut to the head or the body in case of a sudden contact with a stretched cable.

A further problem is that, if the cable is intentionally or accidentally under voltage, when the wire cutters come to an electric contact with the cable, also the vehicle is under voltage, with risks to the passengers to be shocked electrically. Furthermore, if the voltage applied to the cable is very high, for example thousands of Volts, the vehicle would form a condenser with the ground. Since the tyres of these types of vehicles have metal stiffening elements, as well as are made of a material containing high percentages of silicon, which is highly conductive, in this case the tyres would be passed through by a very intense current. Therefore the tyres could burn or explode, with risk of fire or serious damages, bringing the vehicle in electric contact with the ground and then with strong electric currents, with serious risks for the transported people.

A further drawback of the known wire cutters is that, extending in a direction substantially vertical in front of the vehicle, in the presence of guns on the vehicle the freedom of firing is limited, by dead angles that impede the action of a shooter. Furthermore, in case of military vehicle, since the rod can be within in the cone of fire of guns used by the passengers, the risk is high that bullets hit the rod and bounce back injuring the passengers.

From US 5 586 785 A it is known a wire, cutting device which is applied in the front part of a vehicle and formed by a rod having at its end a hooked blade. The wire cutting device is electrically isolated in the connection, point with the vehicle for preventing risks of fulguration. However, for example in case of rain, the electrical isolation disclosed in US 5 586 785 A is not sufficient to protect the vehicle against an electric discharge.

### Summary of the invention

A feature of the present invention is to provide a wire cutting device capable of impeding an electric contact between cables and vehicle.

It is still a feature of the invention to provide a wire cutting device capable of protecting the vehicle from an electrical discharge also in case of water, for example rain.

Another feature of the invention is to provide a vehicle equipped with a wire cutter that achieves the above described objects.

According to the present invention, the above described objects are achieved by a wire cutting device which can be fixed to a vehicle movable in a travelling direction, said device having a rod suitable for being arranged at an angle with respect to a vertical direction and opposite to said travelling direction, said rod having fixing means to said vehicle and an upper end with a hooked blade capable of cutting a wire stretched transversally with respect to said travelling direction,
said wire cutting device comprising means for electric insulation between said cable and said vehicle.

Advantageously, said wire cutting device is obtained from a plurality of adjacent elements, said means for electric insulation comprising plates and bushings of insulating material, arranged between adjacent elements in at least one connection point, adapted to block the electric conductivity between such elements.

According to the invention, said insulating means are arranged at a connection point between the following groups of elements:
- Between segments that can be fastened /unfastened forming said rod;
- Between said hooked blade and said rod.

In particular, said insulating means are obtained by teflon, or other flexible and insulating material.

In particular, said means for electric insulation are made of a material capable of resisting to a maximum voltage of 10000 V, preferably of 5000 V, in particular, of 3000 V.

According to the invention, said hooked blade comprises a flow shielding flange arranged about said at least one connection point, said flow shielding flange consisting of surfaces protruding at an angle adapted to block a water flow at said at least one point. In fact the presence of water, for example in case of rain, at said points of connection could bridge the electric conductivity from the hooked blade to the vehicle.

### Brief description of the drawings.

The invention will be made clearer with the following description of some exemplary embodiments, exemplifying but not limitative, with reference to the attached drawings wherein:
- Figure 1 shows an elevational front view of a vehicle on which a wire cutting device is mounted according to the invention connected by means of an element of interconnection having controlled pliability;
- Figure 2 shows an elevational side partial view of a vehicle on which it is mounted such a wire cutting device;
- Figure 3 shows the cutting action of a wire stretched transversally to the path of a vehicle, by means of such a wire cutting device;
- Figure 4 shows a deformed configuration of such a wire cutting device owing to an attempt of cutting a cable with resistance against break higher than a predetermined value, where the hooked blade is rotated with respect to the working position for disengaging from the uncut cable;
- Figure 5 shows a cross sectional view of a detail of a point of connection by a deformable bracket between the rod of the device according to the invention and two struts stiffening, where the connection is insulated electrically by means of plates and bushings of insulating material;
- Figure 6 shows a cross sectional view of a deformed configuration of the bracket owing to deformation of the wire cutting device for not exceeding the resistance of the cable;
- Figure 7 shows a cross sectional view of a deformed configuration of another exemplary bracket, where it is provided a hinge to assist the rotation;
- Figure 8 shows an exploded view of assembling a hooked blade in an end of the rod, with the interposing plates and bushings of insulating material to insulate electrically the blade from the rod;
- Figure 9 shows a possible embodiment of junction between two different portions of the rod, where the connection is carried out by interposing plates and bushings of insulating material;
- Figures 10 and 11 show respectively two longitudinal perpendicular sections of an end of the rod on which a hooked blade is mounted with the interposing elements of insulating material;
- in figure 12 and 13 respectively an elevational front view and an elevational side view are shown of a vehicle according to a not claimed embodiment, on which a wire cutting device is mounted, having a barrier of protection capable of causing hollow charge rockets to explode remotely from the vehicle, reducing the risks of damage to the vehicle.

### Description of preferred exemplary embodiments.

In the following description a wire cutting device will be illustrated to be mounted on a land vehicle, for example a vehicle on wheels or tracks, which can run up against a cable or wire stretched transversally on its way, accidentally or intentionally. In fact in areas where disasters such as earthquakes or war occur, it is very likely to run up against cables that, in case of earthquakes, can be among ruins or material fallen along the way. Often such cables are crossed by electric current, for example when electric current is distributed across neighbouring buildings, or cables fallen owing to collapse of power lines, or intentionally stretched with object of assaults. In all these cases the presence of the cables is unpredictable by a vehicle on the way.

The transversally stretched wire, can be for example a cable of steel; an electric cable; a barbed wire; a rope.

Therefore, the figures from 1 to 11 show such a wire cutting device 1, capable of meet the above described needs, mounted on a vehicle 10, for example of military type.

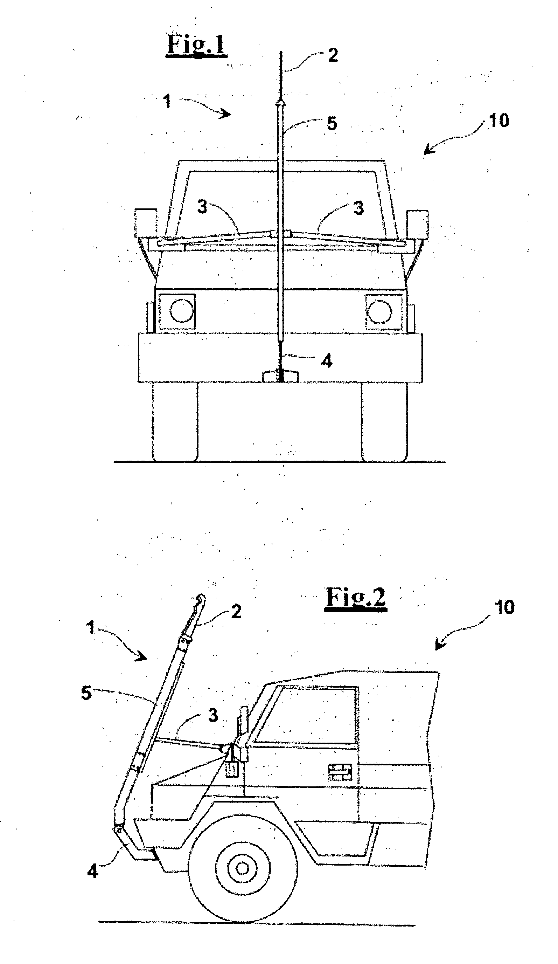

Figures 1 and 2 show such a wire cutting device, having a rod 5, connected at a lower end of vehicle 10 by means of an element of interconnection having controlled pliability 4, formed for example by an elongated deformable lamina capable of folding when it is subject to a stress higher than a predetermined value, allowing the rotation of rod 5 and of blade 2 for freeing unhooked the wire cutting device when it is not capable of cutting the cable.

As shown in the above described figures 1 and 2, two stiffening struts 3 are provided capable of fastening the rod to a front part of the vehicle and of supporting the rod: such struts are arranged in order not to block the view of the passengers and not to impede the firing action of the same.

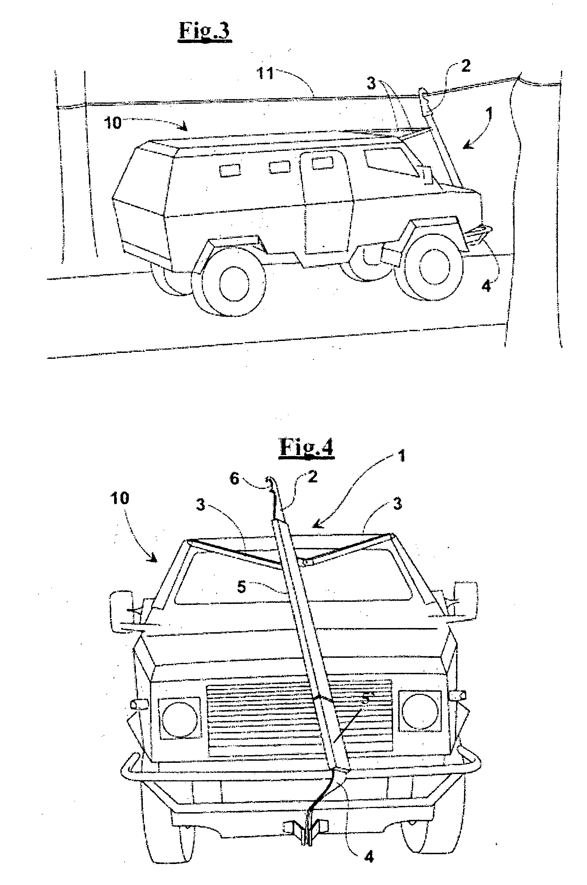

In figure 3 the cutting action of a cable 11 is shown accomplished by a wire cutting device 1 according to the invention, during the transit of a vehicle 10 along a way where cable 11 is stretched, for example for an assault. The kinetic energy of the vehicle 10 allows applying to the cable 11 a transversal cutting action that, when passes the resistance of the cable 11, cuts it, otherwise the wire cutting device 1 gives way, and in particular, the element of interconnection having controlled pliability gives way as shown in figure 4, rotating the blade 2 and freeing it from the cable. This way the vehicle can be unhooked, otherwise, if were trapped by the cable, it would become an easy target of an assault.

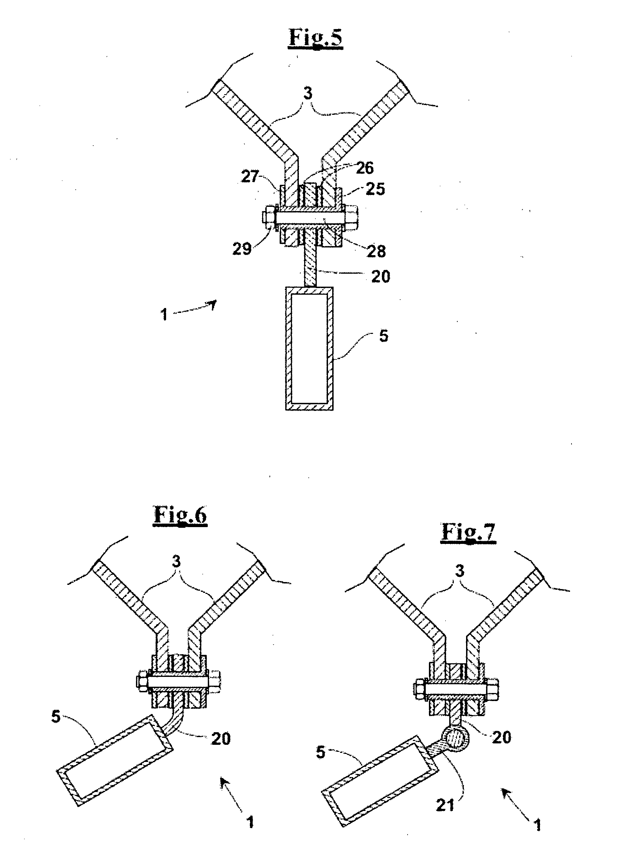

More precisely, to assist the rotation of rod 5 and the deformation of the element of interconnection in case the breaking resistance of the cable is not exceeded, the rod may have a front plane face 8, as shown in figures 5, 6 and 7, on which the action of the cable from cutting can generate a twisting torque.

The struts 3 are arranged in order not to impede the angular span of a gun when firing and not to block the view to the passengers, for example they are arranged aligned with the roof of the vehicle or with the bonnet. This way, if a bullet coming from the vehicle hits the rod, it cannot hit a stiffening strut and then bounce back.

As shown in figure 4, the rod 5 can comprise more rod portions that can be assembled longitudinally. In particular, a rod portion can be provided 5' integral to the deformable element of interconnection 4, in order to be replaced easily after the deformation. A flexible container can be provided having gripping handles for carrying the portions that are ready to be assembled.

Figure 5 shows a cross sectional view of a detail of a point of connection by a deformable bracket 20 between the rod 5 and two stiffening struts 3, where the rod 5 is insulated electrically by the struts, through insulating means that comprise a bush 25 and three plates 26 and 27 having a hole where bush 25, of insulating material, for example of teflon, is inserted. The connection is carried out with a screw 28 that once fastened keeps bracket 20 between the struts 3.

This way there is not electric contact between bracket 20, struts 3 and screw 28.

In particular, the insulating material is chosen in a way suitable to resist to a maximum voltage of 10000 V, preferably of 5000 V, in particular of 3000 V.

Figure 5 shows a configuration where the bracket 20 is not in deformed configuration, whereas in figure 6 the bracket is deformed after having interacted with a cable too strong.

In figure 7, alternatively to a deformable bracket a hinge 21 is used, to assist the rotation of the rod.

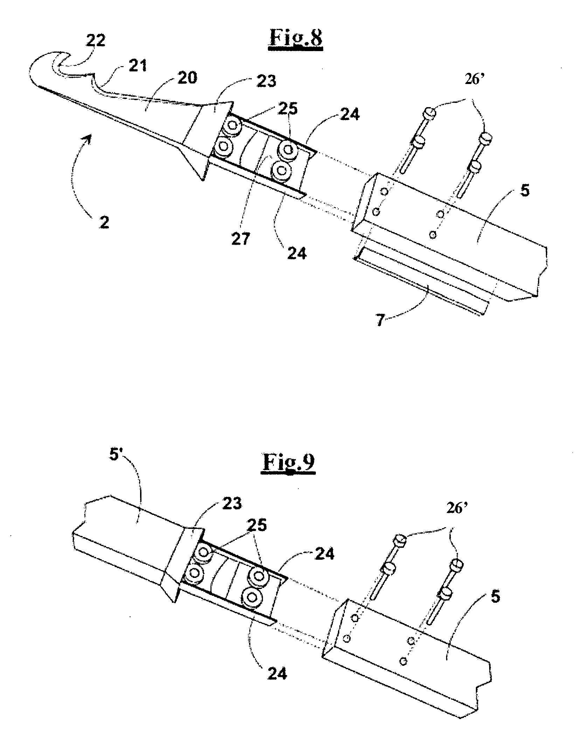

Figure 8 shows a detail of the connection between the hooked blade 2 and the rod 5, between which there are arranged elements of insulating material.

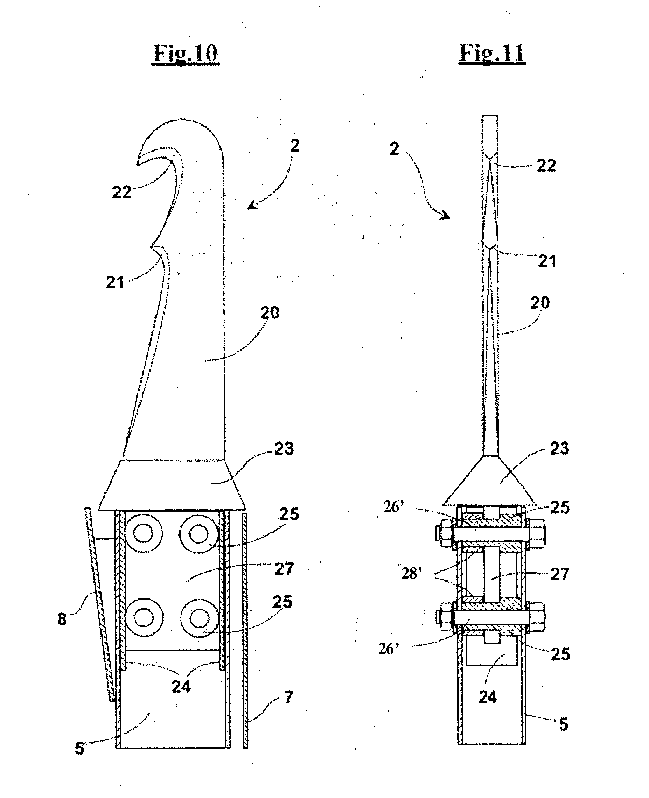

The blade 2 has an engagement plate 27 in rod 5, where plate 27 is insulated laterally from the rod by means of insulating plates 24, whereas holes 29 for screws 26 are insulated by bushings 25 of insulating material, as described in detail in the cross section of figures 10 and 11. Always in figure 8, but also in figure 2, a V-shaped deflecting section 7 is shown, integral to rod 5, in particular, welded, and oriented towards an operator the passengers of the vehicle. This deflecting section, if it is hit accidentally by a bullet fired by the passengers of the vehicle, owing to the presence of surfaces at an angle with respect to the trajectory of the bullet, is capable of deflecting laterally the bullet avoiding that it can bounce back and hit the passengers.

Figure 9 shows a possible connection between rod 5 and a next segment 5'. This connection has the same connecting features between rod 5 and blade 2 described in figure 8.

In the figures from 8 to 11 a rain shielding flange 23 is visible arranged on the hooked blade 2 or on a upper segment of rod 5 arranged above a lower segment 5. This flange, consisting of inclined surfaces, has the object of cutting the water flow, for example in case of rain, between electrically insulated adjacent elements, in fact in determined conditions and in case of high voltage, the water could form a conductive layer and then eliminate the electric insulation between adjacent segments.

As shown in figures 8, 10 and 11, the hooked blade comprises a plane portion 20 and at least one curved blade 22 obtained in the inner edge of the hook. In the example described in the figures the hooked blade comprises a second curved blade 21 that is arranged before curved blade 22.

In figures 10 and 11 two longitudinal sections of the cutting device of the invention are shown near to hooked blade 2, where the portion of engagement 27 integral to the hooked blade, the insulating bushings 25, the insulating plates 24 are shown, and in figure 11, insulating rings 28, arranged along the stem of the bushings 25. In figure 10 a cross section is shown of the deflecting section 7 welded along the rod 5 and opposite a chute guide of beveled portion 8 adapted to allow the cable or wire to be cut, and not shown in figure, to slide between rod 5 and blade 2, passing on the flow shielding flange 23.

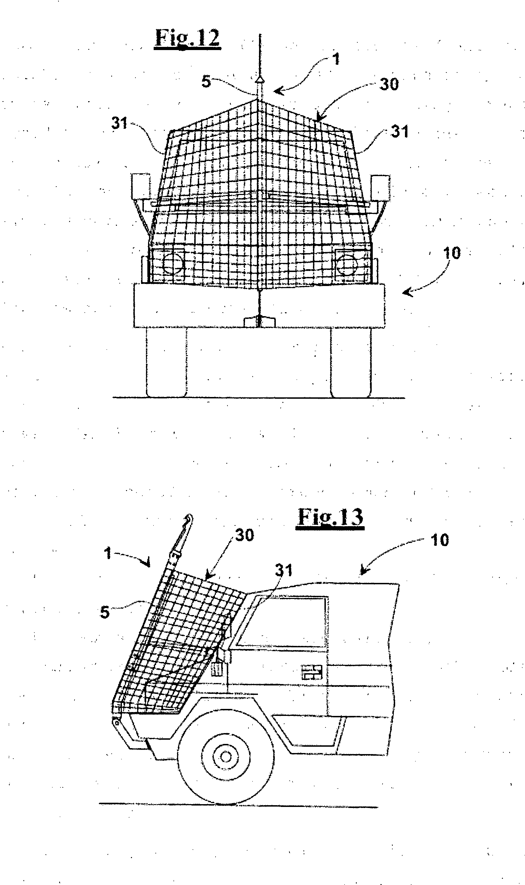

Figures 12 and 13 show the application of a barrier of protection 30 on the front part of the vehicle 10, wherein this barrier rests centrally along the rod 5 and is connected laterally along edges 31 to the front part of the vehicle, protecting the windscreen and the bonnet. This barrier of protection 30 does not form part of the claimed invention. This barrier, as shown in the figures, is formed for example, with a metal net with a square mesh having an edge size set between 1 and 8 cm, in particular, between 2 and 6 cm, preferably 4 cm.

Such a barrier is particularly advantageous for defence against hollow charge rockets, which have in the front part two piezoelectric triggers capable causing the charge to explode in case of any slight contact with an obstacle. In fact, as the rocket hits the net, it explodes, but discharging the destructive potential at a distance from vehicle and thus limiting the damages.

A wire cutting device as above described can be used for example on a vehicle whose optimal speed for cutting is set between 3 and 50 km/h, preferably between 5 and 30 km/h, in particular, the same as 15 km/h.

## Claims

1. A wire cutting device (1) which can be fixed to a vehicle (10) movable in a travelling direction, said device having a rod (5,5') suitable for being arranged at an angle with respect to a vertical direction and opposite to said travelling direction, said rod having fixing means (3, 4) for fixing the rod to the vehicle and an upper end with a hooked blade (2) suitable for cutting a wire stretched, in use, transversally with respect to said travelling direction, **characterized by the fact that**
said wire cutting device comprises insulating means (25, 26) associated with said rod (5,5') or to the relative fixing means (3, 4) for creating an electric insulation between said cable and said vehicle, wherein said insulating means (25,26) are arranged at a connection point between the following two groups of elements:
- between segments (5', 5) that can be fastened/unfastened forming said rod;
- between said hooked blade and said rod; wherein
- the wire cutting device further comprises a flow shielding flange (23) which is arranged about said at least one connection point, said flow shielding flange consisting of surfaces protruding at an angle adapted to block a water flow at said at least one connection point.

2. A wire cutting device, according to claim 1, wherein said wire cutting device (1) is obtained from a plurality of adjacent elements, means being provided for electric insulation comprising plates (26) and bushings (25) of insulating material, arranged between adjacent elements in at least one connection point, said means being adapted to block the electric conductivity between such elements.

3. A wire cutting device, according to claim 1, wherein said insulating means are obtained by teflon, or other flexible and insulating material.

4. A wire cutting device, according to claim 3, wherein said means for electric insulation being made of a material capable of resisting to a maximum voltage of 10000 V, preferably 5000 V, in particular, 3000 V.

5. A vehicle, comprising a wire cutting device accordingly with one or more previous claims.

## Patentansprüche

1. Leitungsschneidevorrichtung (1), die an einem Fahrzeug (10) befestigt werden kann, das sich in einer Fahrtrichtung bewegen kann, wobei die Vorrichtung eine Stange (5, 5') aufweist, die dazu geeignet ist, in einem Winkel bezüglich einer vertikalen Richtung und entgegengesetzt zu der Fahrtrichtung angeordnet zu werden, wobei die Stange Befestigungsmittel (3, 4) zum Befestigen der Stange an dem Fahrzeug und ein oberes Ende mit einer Hakenklinge (2) aufweist, die zum Schneiden einer Leitung geeignet ist und die im Gebrauch quer bezüglich der Fahrtrichtung ausgestreckt ist, **dadurch gekennzeichnet, dass**
die Leitungsschneidevorrichtung Isoliermittel (25, 26) umfasst, die mit der Stange (5, 5') oder dem relativen Befestigungsmittel (3, 4) zum Erzeugen einer elektrischen Isolierung zwischen dem Kabel und dem Fahrzeug in Verbindung stehen, wobei die Isoliermittel (25, 26) an einem Verbindungspunkt zwischen den folgenden zwei Gruppen von Elementen angeordnet sind:
- zwischen Segmenten (5', 5), die fixiert/gelöst werden können und die die Stange bilden;
- zwischen der Hakenklinge und der Stange; wobei
- die Leitungsschneidevorrichtung weiterhin einen Strömungsabschirmflansch (23) umfasst, der um den mindestens einen Verbindungspunkt herum angeordnet ist, wobei der Strömungsabschirmflansch aus Flächen besteht, die in einem Winkel vorragen, der dazu eingerichtet ist, eine Wasserströmung an dem mindestens einen Verbindungspunkt abzublocken.

2. Leitungsschneidevorrichtung nach Anspruch 1, wobei die Leitungsschneidevorrichtung (1) aus mehreren angrenzenden Elementen erhalten wird, Mitteln, die zur elektrischen Isolierung vorgesehen sind, die Platten (26) und Durchführungen (25) aus isolierendem Material umfassen, die zwischen angrenzenden Elementen in mindestens einem Verbindungspunkt angeordnet sind und die dazu eingerichtet sind, die elektrische Leitfähigkeit zwischen den Mitteln zu blockieren, die derartige Elemente sind.

3. Leitungsschneidevorrichtung nach Anspruch 1, wobei die Isoliermittel durch Teflon oder ein anderes biegsames und isolierendes Material erhalten werden.

4. Leitungsschneidevorrichtung nach Anspruch 3, wobei die Mittel zur elektrischen Isolierung aus einem Material hergestellt sind, das einer Höchstspannung von 10.000 V, vorzugsweise 5000 V, insbesondere 300 V standhalten kann.

5. Fahrzeug, das eine Leitungsschneidevorrichtung nach einem oder mehreren vorhergehenden Ansprüchen umfasst.

## Revendications

1. Dispositif coupe-fil (1) pouvant être fixé à un véhicule (10) apte à se déplacer dans la direction du déplacement, ledit dispositif comprenant une tige (5, 5') conçue pour être montée à un angle par rapport à une direction verticale et opposée à ladite direction de déplacement, ladite tige comprenant des moyens de fixation (3, 4) pour fixer la tige au véhicule et une extrémité supérieure dotée d'une lame crochet (2) conçue pour couper un fil tendu, lors de l'utilisation, transversalement par rapport à ladite direction de déplacement, **caractérisé par le fait que** ledit dispositif coupe-fil comprend des moyens isolants (25, 26) associés à ladite tige (5, 5') ou aux moyens de fixation relatifs (3, 4) pour créer une isolation électrique entre ledit câble et ledit véhicule, dans lequel lesdits moyens isolants (25, 26) sont placés à un point de connexion entre les deux groupes d'éléments suivants :
- entre les segments (5', 5) pouvant être attachés/détachés formant ladite tige ;
- entre ladite lame crochet et ladite tige ;
- dans lequel le dispositif coupe-fil comprend en outre une collerette de protection contre l'écoulement (23) montée sur ledit point de connexion au moins, ladite collerette de protection contre l'écoulement étant dotée de surfaces saillantes à un angle conçues pour bloquer l'écoulement de l'eau au niveau dudit point de connexion au moins.

2. Dispositif coupe-fil, selon la revendication 1, dans lequel ledit dispositif coupe-fil (1) est obtenu à partir de plusieurs éléments adjacents, les moyens fournis pour l'isolation électrique comprenant des plaques (26) et des douilles (25) de matériau isolant, disposées entre les éléments adjacents dans ledit point de connexion au moins, lesdits moyens étant conçus pour bloquer la conductivité électrique entre ces éléments.

3. Dispositif coupe-fil, selon la revendication 1, dans lequel lesdits moyens isolants sont composés de téflon, ou autre matériau isolant et souple.

4. Dispositif coupe-fil selon la revendication 3, dans lequel lesdits moyens conçus pour l'isolation électrique sont composés d'un matériau capable de résister à une tension maximale de 10000 V, de préférence 5000 V, en particulier, 3000 V.

5. Véhicule, comprenant un dispositif coupe-fil selon une ou plusieurs des revendications précédentes.
